Europäisches Patentamt

European Patent Office

Office européen des brevets

(11) Publication number: 0 594 189 A1

# EUROPEAN PATENT APPLICATION

(21) Application number: 93117148.2

(22) Date of filing: 22.10.93

(51) Int. Cl.5: C08G 75/02

(30) Priority: 23.10.92 US 965642

(43) Date of publication of application:
27.04.94 Bulletin 94/17

(84) Designated Contracting States:
AT BE DE ES FR GB IT NL

(71) Applicant: PHILLIPS PETROLEUM COMPANY
5th and Keeler
Bartlesville Oklahoma 74004(US)

(72) Inventor: Clark, Earl, Jr.
1003 Arbor Drive
Bartlesville, OK 74006(US)
Inventor: Scoggins, Lacy Eugene
1310 Lariat Drive
Bartlesville, OK 74006(US)

(74) Representative: Dost, Wolfgang, Dr.rer.nat.,
Dipl.-Chem. et al
Patent- und Rechtsanwälte
Bardehle . Pagenberg . Dost . Altenburg .
Frohwitter . Geissler & Partner
Galileiplatz 1
D-81679 München (DE)

(54) Production of poly(arylene sulfide)polymers containing reduced amounts of oligomers.

(57) A method for removing oligomers and non-polymeric impurities from poly(arylene sulfide) polymers is provided in which a poly(arylene sulfide) polymer associated with oligomers and non-polymeric impurities is contacted with a solvent at a sufficient temperature to substantially dissolve the oligomers and impurities but not the poly(arylene sulfide) polymer; then the polymer is separated from the solution containing the oligomers and impurities at an elevated temperature. A polymer product produced by this method is also disclosed.

FIG. I

## BACKGROUND OF THE INVENTION

This invention relates to a method of purifying a poly(arylene sulfide) polymer and the composition produced thereby. More particularly, in a more preferred aspect this invention pertains to removal of oligomers and non-polymeric impurities from a poly(phenylene sulfide) polymer and the composition produced thereby.

Poly(arylene sulfide) polymers are known in the art and have found wide use due to their desirable thermal and chemical resistance. Poly(arylene sulfide) polymers are useful in the formation of films, fibers, composites and molded parts by a variety of methods known to those of skill in the art.

Oligomers and polymer-by-products in poly(phenylene sulfide) polymer products may contribute to certain processing and final product problems. Problems attributed to high oligomer concentrations in the polymer include mold plate out, die face build up, exhaust duct fouling, bubble formation in molded parts, corrosion, injection molding drool and off gassing during injection molding. Solvent extraction methods have been used to remove some of the oligomers from poly(phenylene sulfide) products, but a detrimental oligomer concentration usually remains after extraction. Thus, there still exists a need for an improved oligomer and non-polymeric impurity removal technique.

It would therefore be desirable to have a method of producing a poly(arylene sulfide) polymer having reduced amounts of oligomers and impurities.

## SUMMARY OF THE INVENTION

An object of this invention is to minimize the oligomers and non-polymeric impurities a poly(arylene sulfide) polymer.

In accordance with this invention, a poly(arylene sulfide) polymer is subjected to a process to remove undesirable oligomers and non-polymeric components. The poly(arylene sulfide) polymer is contacted with a solvent at temperatures sufficient to dissolve the oligomers and non-polymeric impurities, but not high enough to dissolve the poly(arylene sulfide) polymer. Then the resulting slurry is subjected to a separation at the elevated temperature to remove the solid purified poly(arylene sulfide) polymer product, thereby removing the liquid oligomers and non-polymeric impurities from the poly(arylene sulfide).

In a preferred embodiment of this invention, the poly(arylene sulfide)/solvent slurry is subjected to a dehydration step to remove water, and the separation of the poly(arylene sulfide) polymer from the dissolved oligomers and impurities is followed by a step of washing the poly(arylene sulfide) polymer with additional solvent at an elevated temperature one or more times to remove remaining oligomers and impurities. Then the polymer is washed with deionized water at an elevated temperature one or more times to remove any remaining solvent.

### Description of the Drawings

Figure 1 depicts a schematic diagram for a preferred embodiment of the invention process.

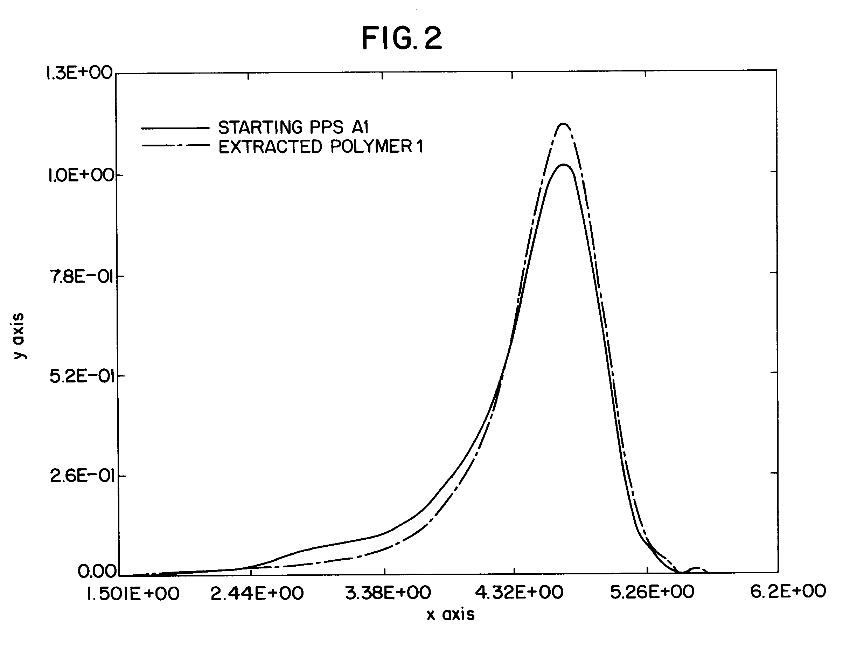

Figure 2 depicts a comparison of the gel permeation chromatography results for a poly(arylene sulfide) polymer and the same polymer after treatment according to the invention.

## DESCRIPTION OF THE PREFERRED EMBODIMENTS

The poly(arylene sulfide) polymers useful in this invention are those prepared according to any method known to those of ordinary skill in the art, such as, for example, those disclosed in U.S. 3,354,129, U.S. 3,919,177, U.S. 4,038,261, U.S. 4,038,262, U.S. 116,947, U.S. 4,282,347 and U.S. 4,350,810, which patents are hereby incorporated by reference. The poly(arylene sulfide) polymer is generally prepared by contacting reactants comprising a dihalosubstituted aromatic compound, a sulfur source and a polar organic compound, optionally in the presence of alkali metal carboxylates and/or polyhaloaromatic compounds, under polymerization conditions.

Examples of poly(arylene sulfide) polymers suitable for purposes of this invention include poly(2,4-toluene sulfide), poly(4,4'-biphenylene sulfide) and poly(phenylene sulfide). Because of its availability and desirable properties (such as high chemical resistance, non-flammability, and high strength and hardness) poly(phenylene sulfide) is the presently preferred poly(arylene sulfide) polymer.

During the preparation of the poly(arylene sulfide) polymer, certain by-products and oligomers can be formed. These non-polymeric by-products and oligomers can become associated with the poly(arylene sulfide) polymer during recovery. The term "oligomers" as used herein, is meant to denote compounds containing units contributed by the monomers in numbers less that about 15. Non-polymeric impurities include unreacted monomer and other reaction materials such as alkali metal carboxylates, and the products of side reactions and like materials. The non-polymeric impurities which can be removed by dissolving them in the suitable solvent are not meant to include alkali metal halide produced as a by-product in the reaction. This material is typically removed during conventional recovery of the poly(arylene sulfide) polymer. If the poly(arylene sulfide) polymer employed in this invention contains such alkali metal halide, it is preferred to remove it as much as is reasonably possible prior to contacting the poly(arylene sulfide) polymer, oligomers and non-polymeric impurities with the solvent. Removal can be effected, for example, by washing the polymer with water, optionally at elevated temperatures.

Any suitable solvent can be used in this invention. Suitable solvents are those in which the oligomers and non-polymeric impurities can be substantially dissolved. Such solvents should remain liquid at the temperatures and pressures involved. Solvents useful in this invention to dissolve oligomers and non-polymeric impurities include, but are not limited to, amides, lactams, sulfones, ethers, and halogenated aromatics. Examples of amides and lactams which may be useful in the present invention include tetramethyl urea, N,N'-ethylenedipyrrolidone, N-methylpyrrolidone, N-ethylpyrrolidone, N-cyclohexylepyrrolidone, caprolactam, N-methylcaprolactam, and hexamethylphosphoramide. Possible sulfones useful as solvents in the present invention include sulfolane, diphenyl sulfone, and chlorinated diphenyl sulfones. Examples of sulfides possibly useful in the present invention are diphenyl sulfide and chlorinated diphenyl sulfides. Ethers which may be useful as solvents in the present invention include diphenyl ether and chlorinated diphenyl ethers. Chloronaphthalene is the preferred halogenated aromatic useful as a solvent in the present invention.

Any suitable amount of solvent may be used to dissolve the oligomers and non-polymeric impurities.

The amount of solvent used should be that sufficient to contact as much of the polymer as possible in order to maximize the amount of oligomers and impurities removed. In order to utilize slurry-handling equipment, it is presently preferred to employ an amount of solvent such that the concentration of poly-(arylene sulfide) polymer in the solvent is below about 50 weight %. The upper limit on the amount of solvent used will be based on practical (equipment) and economic considerations. It is presently preferred not to exceed a solvent to polymer weight ratio of about 10 to 1.

The amount of water present during the step of dissolving the oligomers and impurities generally should be minimized in order to maximize the amount of oligomers and impurities removed.

It is therefore preferred that the poly(arylene sulfide) polymer, oligomers and impurities be subjected to a dehydration or drying step to remove at least a portion of any water present. It is presently preferred to mix the polymer, oligomers and impurities with the solvent and heat the mixture with a provision for removing the water to a temperature in the range of about 140°C to about 205°C, preferably 180-205°C so as to remove at least about 75 weight % of any water present, preferably 90-100 weight % of any water present.

Any suitable temperature can be used for the step in which the poly(arylene sulfide) polymer, oligomers and non-polymeric impurities are dissolved. The temperature will vary according to which poly(arylene sulfide) polymer and solvent are employed and whether additional compounds are present. For example, the temperature required for dissolution of the oligomers and non-polymeric impurities in the solvent N-methyl-2-pyrrolidone is typically about 140°C to about 205°C. Generally, temperatures exceeding about 300°C should be avoided since poly(phenylene sulfide) could begin to degrade or react and/or the solvent begin to boil at above this temperature. In addition, it is preferred to agitate the slurry in order to further promote dissolution of the oligomers and impurities.

The time period required to contact the solvent with the polymer, oligomers and impurities is that amount of time necessary for dissolution of the oligomers and impurities. Generally the time will vary from the amount of time necessary to achieve contact of the solvent with the polymer, oligomers and impurities to about 75 minutes. Although longer times could be employed, the amount of additional oligomers and impurities removed would not typically justify the cost of lengthening the production process. It is presently preferred to contact the solvent with the polymer, oligomers and impurities for a time period of no more than about 30 minutes.

After dissolution of the oligomers and impurities polymer, separation of the solid polymer from the solution is initiated. Slurry temperature is maintained at an elevated temperature during the separation process in order to insure that the dissolved impurities remain in solution.

For poly(phenylene sulfide) polymers, the filtration will generally be performed at a temperature in the range of about 140 to 205°C, preferably 180 to 205°C.

The separation step can be performed in any manner known to those of ordinary skill in the art for separating solids from liquids, such as, for example, filtration or centrifugation. The resultant poly(phenylene sulfide) polymer may be washed or extracted with solvent to remove remaining minor amounts of oligomers and/or impurities. Preferably at least one solvent wash is performed at an elevated temperature. The solvent is preferably the solvent used for dissolution of the oligomers and impurities in the first step of the invention. Preferably the solvent is heated to about 80°C to about 205°C, preferably 100-200°C prior to contact with the polymer.

The polymer can be washed one or more times with the solvent at the elevated temperature, then recovered.

It is preferred to follow the solvent wash step or steps with at least one deionized water wash at an elevated temperature to remove solvent remaining with the polymer after recovery. Water washes are preferably performed at a temperature in the range of about 40°C to about 100°C, preferably 60-100°C. It is preferred that enough water washes be performed to reduce the solvent content of the polymer to a level of about 3 weight % or lower, based on the weight of the polymer.

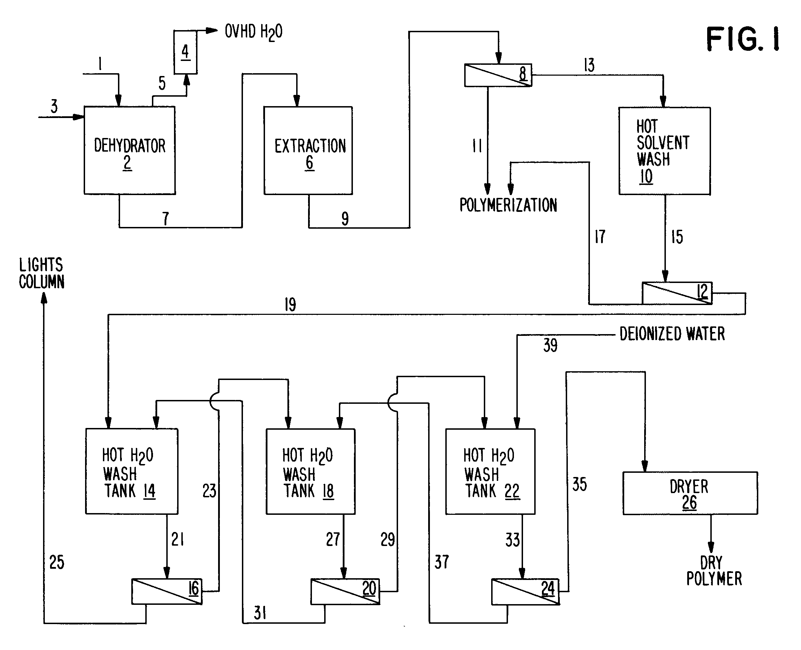

A preferred embodiment of the invention process is depicted in Figure 1. Referring to Figure 1, poly-(arylene sulfide) polymer containing water, oligomers and impurities is passed through stream 1 into dehydrating vessel 2. Solvent is also charged into vessel 2 through stream 3. Water is removed through overhead stream 5 and the dehydrated polymer/oligomer/impurities/solvent mixture is passed through bottoms stream 7 to extraction vessel 6. The slurry resulting from the extraction step is passed through stream 9 to separation means 8, where the solvent containing dissolved oligomers and impurities is recycled to another polymerization or is disposed of via stream 11. The purified polymer is passed through stream 13 to a solvent wash vessel 10, then to separations means 12, where the solvent filtrate is separated and recycled or disposed of via stream 17. The further purified polymer passes through stream 19 to a series of hot water wash tanks 14, 18 and 22, with separation means 16, 20 and 24 following each wash. Purified polymer progresses through streams 21, 23, 27, 29, 33 and 35 until polymer reaches Dryer 26. Deionized water is added to the wash tanks and recycled to water wash tanks via streams 39, 37 and 23 respectively.

The polymer produced by the invention method can be used neat or be mixed with various additives, fillers and reinforcement for use in varied applications, such as fiber, injection molding compound, or fiber-reinforced composites.

A further understanding of the present invention and its advantages will be provided by reference to the following examples. The examples are provided merely to illustrate the practice of the invention and should not be read as limiting the scope of the invention or the appended claims in any way. Reasonable variations and modifications, not departing from the essence and spirit of the invention, are contemplated to be within the scope of patent protection desired and sought.

Examples

In the following examples, the polyphenylene sulfide (PPS) melt flow rates were determined by the method of ASTM D 1238-86, Procedure B-Automatically Timed Flow Rate Procedure, Condition 316/5.0, modified to use a 5 minute preheat. The values of flow rate are expressed as grams per ten minutes (g/10 min).

Polymer molecular weight determinations were carried out on a specially constructed high temperature gel permeation chromatography instrument connected to a flame ionization detector. Determinations were done in 1-chloronaphthalene at 220°C. Results are reported in terms of the weight average molecular weight (Mw) in units of grams per mole (g/mol) and are based on polystyrene standards.

The relative amounts of volatiles present in polymer samples were measured using a quartz crystal microbalance (QCM). This test involved vaporizing volatile material from a solid PPS sample, collecting the vapors on a water cooled, vibrating quartz crystal, and estimating the amount of condensed material by changes in frequency of the vibrating crystal. A weighed sample of the PPS polymer was placed in the bottom of a heated (290°C) stainless steel beaker that was covered with a lid containing the vibrating crystal. As vapors condensed on the crystal, the resonance frequency of the crystal decreased in proportion to the amount deposited. Test values are reported in terms of a dimensionless relative number proportional to the change in frequency of the crystal in a 30 minute test time. Lower reported values indicate that the test sample had a lower level of volatiles at the test temperature than samples with higher QCM values.

Polymer ash values were determined by burning a weighed sample of the polymer in a platinum dish. Residual carbonaceous material was removed by heating the platinum dish and contents at 540°C in a muffle furnace. The weight of the residue (ash) is expressed as a percentage of the original weight of the polymer.

Example I

This example illustrates a typical polymerization and flash recovery of PPS and demonstrates the PPS extraction process to reduce the polymer volatiles level. The PPS was prepared in a 340 liter reactor using aqueous sodium hydroxide (NaOH), aqueous sodium hydrosulfide (NaSH), sodium acetate, N-methyl-2-pyrrolidone (NMP), and p-dichlorobenzene (DCB).

Aqueous NaOH and aqueous NaSH were premixed in a separate heating vessel. The warmed (about 115°C) liquid mixture was charged with a following NMP flush to the reactor containing NMP and sodium acetate. This mixture was subjected to a dehydration step wherein water plus some NMP were removed from the reactor by distillation.

Molten DCB was then charged to the reactor at about 225-230°C and the reaction mixture held at about 230°C for one hour, then at about 264°C for 2 hours. The reactor contents were transferred to another vessel where reduced pressure conditions caused NMP and other volatiles to be flashed overhead for recovery.

Following the flashing operation, the reaction mixture was washed twice with 454 L of deionized water at ambient temperature, once with 300 L of deionized water at 177°C, and once with 300 L of deionized water containing 150 mL of acetic acid at 177°C utilizing a PPS slurry filtration to separate the PPS from the wash/rinse liquid.

Portions of the water-wet, filtered PPS polymer, designated polymer A, were used in the following extractions. Another portion of the wet polymer collected after the 177°C deionized water wash was dried to produce a control sample A1 with a flow rate of 432 g/10 min and a QCM value of 2.4.

In each extraction sequence, summarized in Table I, 250 g of the wet cake A was mixed with 610 g of NMP in a 2-liter, round-bottomed flask equipped with a condenser and the mixture was then heated to about 200°C in a dehydration step to remove water and some NMP.

The resulting slurries in runs 1-3 were further heated for 60 minutes at a temperature of about 205°C and the slurry in run 4 was filtered immediately. Filtrations of the hot, extracted slurries were carried out on paper filters or 270 mesh screens to recover the extracted polymer that was then rinsed with 610 g of NMP at 200°C. The NMP filtrates from the extractions and rinses were saved for use in later PPS polymerizations in Example IV.

After the rinse slurry had been filtered, the NMP-wet polymer cakes were washed three times at reflux (about 100°C) for 60 minutes with deionized water containing varying amounts of NMP to simulate sequential solutions of a countercurrent water wash to remove the NMP from the polymer. The three wash solutions contained 1) 20 g NMP and 380 g water, 2) 4 g NMP and 396 g water, and 3) 400 g water.

The final, washed PPS samples were rinsed with acetone, dried, and evaluated. Table I contains the treatment conditions and the test results. The product flow rates and QCM values are decreased from the corresponding values for the control polymer A1. The results show that the extraction process removed a portion of the lower molecular weight material.

Assuming that the original wet cake contained about 100 g of dry polymer, more than 90 weight percent of the PPS was recovered in runs 1 and 2. Less polymer was recovered in runs 3 and 4 because of losses through the 250 mesh screen.

## Table I

### PPS Treatment[a]

| | Polymer | | | |
|---|---|---|---|---|
| | 1 | 2 | 3 | 4 |
| **Dehydration** | | | | |
| Temp, °C | 200 | 200 | 200 | 200 |
| Overhead NMP, g | 20.7 | 30.2 | 27.2 | 25.1 |
| Overhead, $H_2O$, g | 130.8 | 133.2 | 132.2 | 136.4 |
| **Extraction** | | | | |
| Time, min | 60 | 60 | 60 | 0 |
| Screen | paper | paper | 270 mesh | 270 mesh |
| **Rinse** | | | | |
| Screen | paper | paper | 270 mesh | 270 mesh |
| **Recovered PPS** | | | | |
| Weight, g | 92.4 | 90.9 | 75.1 | 75.6 |
| Flow rate, g/ 10 min | 194 | 197 | 199 | 213 |
| QCM at 290°C | 0.8 | b | b | b |

[a] Starting PPS A with dry FR=432 g/10 min.

[b] Not determined

Changes in the PPS by the extraction process are clearly shown in gel permeation chromatography (GPC) results (Figure 1) for control polymer A1 and polymer 1. The weight average molecular weights (Mw) (A1 Mw = 41,950 and 1 Mw = 47,890), indicate and the chromatograph (Figure 1) show that the low molecular weight hump present in A1 is absent in the extracted polymer 1.

Example II

Three more extraction runs were carried out to demonstrate the effect of various dehydration, extraction, and rinse temperatures on the recovered polymer. Runs 5-7 were done with the same starting wetcake polymer A and a procedure similar to that used in Example I. Run 5 was dehydrated, extracted, and rinsed at 175°C. Run 6 was dehydrated, extracted, and rinsed at 150°C. Run 7 was dehydrated at 200°C, cooled to 125°C for filtration, and rinsed at 125°C. Filtrations were done with 250 mesh screens.

The process conditions and results are presented in Table II. Although the polymer recovery was good in each run, use of the lower dehydration, extraction, and rinse temperatures were less effective at oligomer removal, (indicated higher flow rate and less QCM reduction) than use of the temperatures in Example I.

## Table II

### PPS Treatment[a]

| | Polymer | | |
|---|---|---|---|
| | 5 | 6 | 7 |
| **Dehydration** | | | |
| Temp., °C | 175 | 150 | 200 |
| Overhead NMP, g | 19.2 | 21.8 | 31.8 |
| Overhead $H_2O$, g | 129.6 | 110.9 | 131.4 |
| **Extraction** | | | |
| Time, min | 60 | 60 | During Cooling |
| Temp., °C | 175 | 150 | 200 --125 |
| Screen, mesh | 250 | 250 | 250 |
| **Rinse** | | | |
| Temp., °C | 175 | 150 | 125 |
| Screen, mesh | 250 | 250 | 250 |
| **Recovered PPS** | | | |
| Weight, g | 95.4 | 95.2 | 94.9 |
| flow rate, g/10 min | 259.2 | 259.4 | 259.1 |
| QCM at 290°C | 1.8 | b | b |

[a]Starting PPS A with dry FR=432 g/10 min.

[b]Not determined.

Example III

This example presents control runs to show that extraction temperatures above those of the inventive process are less suitable due to changes in the polymer from the use of high temperatures. Runs 8 and 9 were done with a dehydration temperature of 205°C, an extraction temperature of 265°C, and a rinse temperature of 100°C.

The results are shown in Table III. Although the lower molecular weight material was removed by the treatment, as shown by the reduced QCM value, GPC curves indicated that the polymer molecular weight had actually increased from the original PPS, presumably by high temperature chemical reactions.

## Table III

### PPS Treatment

| | Polymer | |
|---|---|---|
| | 8 | 9 |
| Original PPS | A[a] | A[a] |
| Wet PPS, g | 300 | 300 |
| NMP, g | 1000 | 1000 |
| Dehydration | | |
| Temp., °C | 205 | 205 |
| Overhead NMP, g | 32.3 | 44.2 |
| Overhead $H_2O$, g | 157.5 | 158.4 |
| Extraction | | |
| Temp., °C | 265 | 265 |
| Time, min | 60 | 60 |
| Rinse | | |
| Temp., °C | 100 | 100 |
| Recovered PPS | | |
| Weight, g | 102.6 | 86 |
| Flow rate, g/10 min | 283 | 248 |
| QCM at 290°C | 0.7 | 0.8 |

[a]Starting PPS A with dry FR=432 g/10 min.

### Example IV

The use of NMP recovered from PPS extractions in earlier examples in PPS polymerizations is demonstrated in this example. A series of five PPS polymerizations were carried out in a one-liter reactor.

The polymerizations were done on a 1.00 gram mole scale with the reactor being charged with aqueous NaSH, solid NaOH, solid sodium acetate, and NMP. This mixture was dehydrated to remove water in a dehydration step. At the conclusion of the dehydration, the reactor was cooled and DCB in NMP was added and the mixture was heated to about 245°C for three hours. The reaction mixture was allowed to cool overnight.

The crude PPS product was washed several times with hot deionized water and dried in a vacuum oven to yield the PPS powder.

Fresh NMP was used in control polymerization runs 10 and 11. In runs 12 and 13, recycle NMP from earlier extractions was used for the dehydration step and the DCB was dissolved in fresh NMP for charging to the reactor after the dehydration. Of the total NMP used in runs 12 and 13, 67 weight percent was recycle (extraction filtrate) NMP. In run 14, all NMP used in the dehydration and polymerization was recycle (extraction filtrate) NMP.

The results of the PPS polymerizations are summarized in Table IV. Runs 12 and 13 with some recycle NMP were similar in results to control runs 10 and 11. The flow rate was high in run 14 (all recycle NMP), perhaps due to an inadequate dehydration leaving excess water in the polymerization mixture. Ash values of the polymers made with recycle NMP are increased and could be reduced with a hot water wash.

Table IV

| PPS Polymerizations | | | | | |
|---|---|---|---|---|---|
| | Polymerization | | | | |
| | 10 | 11 | 12 | 13 | 14 |
| NMP | Fresh | Fresh | Recycle | Recycle | Recycle |
| NMP Recycle, % | 0 | 0 | 67 | 67 | 100 |
| Polymer yield, % | 92.4 | 89.7 | 93.5 | 81.1 | 95.2 |
| Flow rate, g/10 min | 396 | 412 | 438 | 441 | 872 |
| Ash, wt% | 0.66 | 0.60 | 0.86 | 0.76 | 0.99 |

Example V

This example demonstrates larger scale PPS polymerizations using recycle NMP from PPS extractions. Five PPS polymers were prepared in a 340 liter reactor using the procedure described in Example I. Only fresh NMP was used in control run 15. In runs 16 through 19, recycle NMP from previous PPS extractions was used along with some fresh NMP.

Table V presents the results of the polymerizations. The recycle NMP in runs 16-19 resulted in PPS products that are about the same as in the control run 15. Calcium acetate was added to the hot water wash solution in runs 17, 18, and 19. Since the polymer dryer was washed out between batches to prevent cross blending, the polymer yields are lower than normal. The QCM value of polymer 19 is typical for non-extracted PPS samples, indicating that there is no buildup of oligomers by recycling the NMP containing extracted oligomers.

Table V

| PPS Polymerizations | | | | | |
|---|---|---|---|---|---|
| | Polymerization | | | | |
| | 15 | 16 | 17 | 18 | 19 |
| Fresh NMP, kg | 130.6 | 28.6 | 28.6 | 28.6 | 28.6 |
| Recycle NMP, kg | 0 | 111 | 111 | 111 | 111 |
| Polymer yield, % | 77.5 | 69.5 | 81.7 | 70.3 | 85.1 |
| Flow rate, g/10 min | 252 | 370 | 438 | 279 | 280 |
| Ash, wt% | 0.44 | 0.43 | 0.57[a] | 0.52[a] | 0.59[a] |
| QCM at 290°C | b | b | b | b | 1.8 |

[a]Calcium acetate was added to the hot wash solution.
[b]Not determined.

Example VI

Polymer 18 from Example V was compounded and injection molded to determine mechanical properties of polymer made with recycled NMP. A commercial PPS sample was also compounded for comparison.

Compounds were prepared by tumble blending mixtures of PPS powder, glass fiber and additives in a plastic bag. The fiberglass and additives were selected from G-filament fiberglass, in this example OC497EE supplied by Owens-Corning; an epoxysilane, in this example gamma-glycidoxypropyltrimethoxysilane available from Union Carbide as TC-100; a hydrotalcite, in this example DHT-4A supplied by Kyowa Chemical Industry; a polyetheretherketone, in this example 380 P supplied by ICI; and a high density polyethylene, in this example TR-161 supplied by Phillips Chemical Company. This dry blend was then melt mixed in a 1.5-inch, 24:1 (L:D), Davis-Standard, single screw extruder at temperature settings of 330-340°C. Extrudate was chopped and then molded into test specimens using an Arburg ECO 305 injection molder using procedures known to those skilled in the art. All samples were annealed for two hours at 200°C before testing. Mechanical properties were determined using ASTM procedures D638 and 790.

The compounding results are shown in Table VI. Compound 21, which was made with recycled NMP, has physical properties slightly below those of compound 20. Apparently the silane used in compound 21 is less effective than normal due to the calcium acetate used in the hot water wash of polymer 18.

## Table VI

### PPS Compound Mechanical Properties

| | Compound | |
| --- | --- | --- |
| | 20 | 21 |
| Polymer | a | 18 |
| Polymer, wt% | 57.5 | 57.5 |
| TC-100 silane, wt% | 0.8 | 0.8 |
| Flexural mod., MPa | 13,600 | 14,000 |
| Flexural strength, MPa | 289 | 227 |
| Tensile strength, MPa | 184 | 150 |
| Elongation, % | 1.30 | 1.04 |
| Izod impact, J/m | | |
| Notched | 75 | 59 |
| Unnotched | 640 | 438 |

[a]Commercial PPS obtained from Phillips Petroleum Co. as Ryton® PPS, grade PR-28, having a nominal extrusion rate of 12-22g/10 min.; measured by ASTM D 1238-86, modified to use a 5 minute preheat time and a 1270g driving weight and an orifice with the dimensions 0.0825±0.0002 in. dia. and 1.250±0.002 in. length.

## Claims

1. A method for purifying a starting arylene sulfide polymer, wherein oligomers and non-polymeric impurities are removed, characterized by
   (a) contacting said starting arylene sulfide polymer with a solvent at a first temperature to dissolve said oligomers and non-polymeric impurities but leaving said arylene sulfide polymer undissolved, and
   (b) separating the purified arylene sulfide polymer from the solvent-slurry containing said oligomers and impurities at a second temperature maintaining said oligomers and impurities dissolved in said solvent.

2. The method of claim 1, wherein said solvent is selected from amides, lactams, sulfones, sulfides, ethers and halogenated aromatic solvents.

3. The method of claim 1 or 2, wherein said arylene sulfide polymer is poly(phenylene sulfide).

4. The method of any of the preceding claims, wherein said first temperature in step (a) is in the range of 140 to 205 °C.

5. The method of any of the preceding claims, wherein said second temperature in step (b) is in the range of 140 to 205 °C.

6. The method of any of the preceding claims, wherein said solvent is N-methyl-2-pyrrolidone.

7. The method of any of the preceding claims which further comprises, after step (b), washing said purified polymer with an additional amount of solvent at a temperature in the range of 80 to 205 °C.

8. The method of claim 7 which further comprises washing said purified polymer with deionized water at a temperature in the range of 40 to 100 °C one or more times.

9. The method of any of the preceding claims, wherein said solvent containing said oligomers and impurities which is separated from said purified polymer in step (b) is employed as a reactant in a subsequent polymerization.

10. The method of any of the preceding claims, wherein the concentration of said arylene sulfide polymer in said slurry is less than about 5 weight percent.

FIG. I

# FIG. 2

EP 0 594 189 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DE-A-33 39 537 (BASF AG) <br> * examples * | 1 | C08G75/02 |
| X | PATENT ABSTRACTS OF JAPAN <br> vol. 11, no. 069 (C-407) 3 March 1987 <br> & JP-A-61 228 023 (KUREHA CHEM IND CO) 11 October 1986 <br> * abstract * | 1,6 | |
| A | PATENT ABSTRACTS OF JAPAN <br> vol. 12, no. 092 (C-483) 25 March 1988 <br> & JP-A-62 223 231 (TOTO KASEI KK) 1 October 1987 <br> * abstract * | 1,8 | |
| A | PATENT ABSTRACTS OF JAPAN <br> vol. 12, no. 132 (C-490) 22 April 1988 <br> & JP-A-62 253 623 (DAINIPPON INK & CHEM INC) 5 November 1987 <br> * abstract * | 1 | |
| P,A | PATENT ABSTRACTS OF JAPAN <br> vol. 17, no. 345 (C-1077) 30 June 1993 <br> & JP-A-05 043 690 (TOSOH CORP) 23 February 1993 <br> * abstract * | 1 | TECHNICAL FIELDS SEARCHED (Int.Cl.5) <br><br> C08G |

The present search report has been drawn up for all claims

| Place of search | Date of completion of the search | Examiner |
|---|---|---|
| BERLIN | 28 January 1994 | Boeker, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)